(19)

Europäisches Patentamt

European Patent Office

Office européen des brevets

(11) **EP 4 541 580 A1**

(12) **EUROPEAN PATENT APPLICATION**
published in accordance with Art. 153(4) EPC

(43) Date of publication:
**23.04.2025 Bulletin 2025/17**

(21) Application number: **23823915.6**

(22) Date of filing: **13.06.2023**

(51) International Patent Classification (IPC):
**B32B 9/00** (2006.01)    **B32B 27/32** (2006.01)
**B65D 65/40** (2006.01)

(52) Cooperative Patent Classification (CPC):
**B32B 9/00; B32B 27/32; B65D 65/40**

(86) International application number:
**PCT/JP2023/021855**

(87) International publication number:
**WO 2023/243625 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.06.2022   JP 2022096288**

(71) Applicant: **Toppan Holdings Inc.**
**Tokyo 110-0016 (JP)**

(72) Inventor: **FUKUGAMI, Miki**
**Tokyo 110-0016 (JP)**

(74) Representative: **Hoffmann Eitle**
**Patent- und Rechtsanwälte PartmbB**
**Arabellastraße 30**
**81925 München (DE)**

(54) **GAS-BARRIER LAMINATE, PACKAGING FILM, PACKAGING CONTAINER, AND PACKAGED PRODUCT**

(57)    A gas barrier laminate includes a substrate layer containing a thermoplastic resin, a deposition layer, and a gas barrier coating layer in this order. In quantitative elemental analysis of a surface of the gas barrier layer by X-ray photoelectron spectroscopy, the ratio of silicon atoms and carbon atoms (Si/C) is 0.25 to 0.90, and the half-width of a peak appearing in a bonding energy region of 100 to 107 eV in a narrow spectrum of an Si 2p orbital is 1.85 eV or less on the surface of the gas barrier coating layer.

FIG.1

EP 4 541 580 A1

**Description**

[Technical Field]

The present disclosure relates to gas barrier laminates, packaging films, packaging containers, and packaged products.

[Background Art]

Packaging containers, such as packaging bags used for packaging pharmaceutical products or the like are required to have gas barrier properties for blocking entry of moisture, oxygen and other gases that may alter the contents, so as to prevent alteration or decay of the contents and retain their functions or properties. For this reason, gas barrier laminates have been used for packaging bags.

Gas barrier laminates, in general, include a substrate layer, a deposition layer, and a gas barrier coating layer in this order.

For example, the following PTL 1 discloses a gas barrier laminate including a substrate layer containing a polyolefin, a metal oxide layer, and a gas barrier coating layer in this order. In the gas barrier coating layer, the content ratio a/b between the content of silicon atoms in the silicon alkoxide or a hydrolysate thereof (mass part a) and the content of a water-soluble polymer (mass part b) is 3/97 or more and 45/55 or less in mass ratio to impart the laminate with good gas barrier properties after retort sterilization or abuse testing.

[Citation List]

[Patent Literature]

PTL 1: WO2021/220977

[Summary of the Invention]

[Technical Problem]

When producing a packaging bag using a gas barrier laminate, a sealant layer is generally provided to the gas barrier coating layer. Such a packaging bag, after being filled with contents and sealed, may be subjected to sterilization treatment at a high temperature of 121°C or higher (hereinafter referred to as high retort treatment).

However, the gas barrier laminate described in PTL 1 has room for improvement in terms of gas barrier properties after high retort treatment and in terms of lamination strength between the gas barrier coating layer and the sealant layer.

The present disclosure has been made in light of the above issues and aims to provide a gas barrier laminate having good gas barrier properties even after being subjected to high retort treatment and having good adhesion to the sealant layer, and to provide a packaging film, a packaging container, and a packaged product.

[Solution to Problem]

In order to solve the above issues, the present disclosure provides a gas barrier laminate comprising a substrate layer containing a thermoplastic resin, a deposition layer, and a gas barrier coating layer in this order, wherein in quantitative elemental analysis of a surface of the gas barrier layer by X-ray photoelectron spectroscopy, a ratio of silicon atoms and carbon atoms (Si/C) is 0.25 to 0.90, and a half-width of a peak appearing in a bonding energy region of 100 to 107 eV in a narrow spectrum of an Si 2p orbital is 1.85 eV or less on the surface of the gas barrier coating layer.

The gas barrier laminate according to the present disclosure has good gas barrier properties even after being subjected to high retort treatment, and has good adhesion to a sealant layer.

In the above gas barrier laminate, the thermoplastic resin may be a polypropylene.

If the thermoplastic resin contained in the substrate layer comprises a polypropylene, gas barrier laminates tend to be deteriorated in gas barrier properties and adhesion to sealant layers after high retort treatment; however, the gas barrier laminate according to the present disclosure has good gas barrier properties and good adhesion to the sealant layer even after being subjected to high retort treatment.

The above gas barrier laminate is preferred to further include an anchor coat layer between the substrate layer and the deposition layer.

In this case, smoothness on the surface of the anchor coat layer is improved even more than that on the surface of the substrate layer. Thus, since the thickness of the deposition layer can be made uniform, gas barrier properties of the gas barrier laminate can be further improved.

In the above gas barrier laminate, the gas barrier coating layer may comprise a cured product of a composition containing a water-soluble polymer, a first silicon compound, and a second silicon compound; the first silicon compound may contain at least one of a silicon alkoxide expressed by the following General Formula (1) and a hydrolysate thereof; and the second silicon compound may contain at least one of a silicon alkoxide expressed by the following General Formula (2) and a hydrolysate thereof

$$Si(OR^1)_4 \ldots \qquad (1)$$

(In General Formula (1), $OR^1$ represents a hydrolyzable group.)

$$(R^2Si(OR^3)_3)_n \ldots \qquad (2)$$

(In General Formula (2), $OR^2$ represents a monovalent organic group, $OR^3$ represents a hydrolyzable group, and n represents an integer greater than or equal to 1.)

In this case, adhesion between the gas barrier coating layer and the deposition layer can be improved, and thus interlaminar delamination of the gas barrier laminate can be suppressed.

In the above gas barrier laminate, the gas barrier coating layer is preferred to have a thickness of 100 nm or more and 700 nm or less.

In this case, gas barrier properties of the gas barrier laminate can be further improved even after being subjected to high retort treatment, compared to the case where the thickness of the gas barrier coating layer is less than 100 nm. Also, compared to the case where the thickness of the gas barrier coating layer exceeds 700 nm, the gas barrier laminate becomes less likely to curl and becomes easier to use as a gas barrier laminate of a packaging film included in a packaging bag.

In the above gas barrier laminate, the water-soluble polymer in the gas barrier coating layer may be a polyvinyl alcohol resin or a modified form thereof.

In this case, the composition, when cured, can impart the gas barrier laminate with even better gas barrier properties. Also, even when cured, the composition can impart the gas barrier laminate with even better flexibility and can further improve gas barrier properties after abuse.

In the above gas barrier laminate, the deposition layer may contain at least one selected from an aluminum oxide and a silicon oxide.

In this case, since $SiO_x$ and $AlO_x$ both have good water vapor barrier properties, the gas barrier laminate can be improved in water vapor barrier properties.

Furthermore, the present disclosure provides a packaging film including the above gas barrier laminate and a sealant layer.

Due to including the above gas barrier laminate, the packaging film has good gas barrier properties even after being subjected to high retort treatment, and can suppress delamination between the sealant layer and the gas barrier coating layer in the gas barrier laminate constituting the packaging film.

Furthermore, the present disclosure provides a packaging container including the above packaging film.

Due to including the gas barrier film, the packaging container has good gas barrier properties even after being subjected to high retort treatment, and can suppress delamination between the sealant layer and the gas barrier coating layer in the gas barrier laminate constituting the packaging film.

Furthermore, the present disclosure provides a packaged product including the above packaging container and contents filled in the packaging container.

The packaged product includes the packaging container which has good gas barrier properties even after being subjected to high retort treatment and can suppress delamination between the gas barrier coating layer and the sealant layer included in the gas barrier laminate of the packaging film, and therefore can suppress deterioration in quality of the contents due to oxygen contamination, over a long period of time.

[Advantageous Effects of the Invention]

The present disclosure provides a gas barrier laminate having good gas barrier properties even after being subjected to high retort treatment and having good adhesion to the sealant layer, and to provide a packaging film, a packaging container, and a packaged product.

[Brief Description of the Drawings]

Fig. 1 is a cross-sectional view illustrating an embodiment of a gas barrier laminate according to the present disclosure.

Fig. 2 is a cross-sectional view illustrating an embodiment of a packaging film according to the present disclosure.

Fig. 3 is a side view illustrating an embodiment of a packaged product according to the present disclosure.

[Description of the Embodiments]

Embodiments of the present disclosure will be described in detail below.

<Gas barrier laminate>

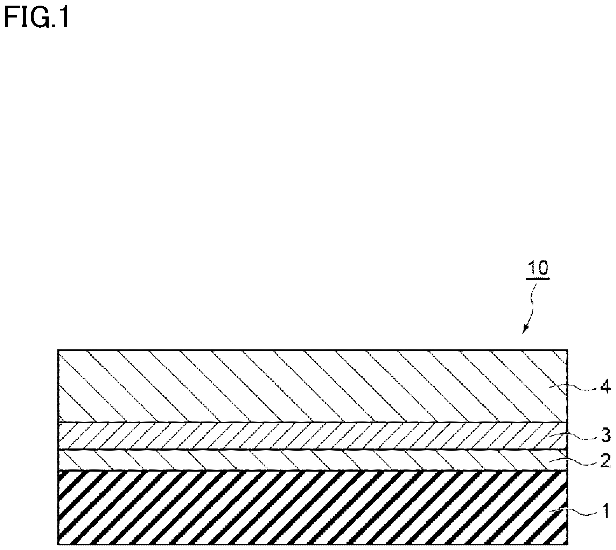

Referring to Fig. 1, an embodiment of a gas barrier laminate according the present disclosure will be described. Fig. 1 is a cross-sectional view illustrating an embodiment of the gas barrier laminate according to the present disclosure. A gas barrier laminate 10 shown in Fig. 1 includes a substrate layer 1 containing a thermoplastic resin, a deposition layer 3, and a gas barrier coating layer 4 in this order. On the surface of the gas barrier coating layer 4, the ratio of silicon atoms to carbon atoms (Si/C) as measured by X-ray photoelectron spectroscopy (XPS) is 0.25 to 0.90, and a half-width of the peak appearing in the bonding energy region of 100 to 107 eV in the narrow spectrum of the Si 2p orbital (hereinafter simply referred to as peak half-width of the Si 2p orbital) is 1.85 eV or less. The gas barrier laminate 10 may include an anchor coat layer 2 as an intermediate layer between the substrate layer 1 and the deposition layer 3.

The gas barrier laminate 10 has good gas barrier properties and good adhesion between the gas barrier coating layer 4 and a sealant layer, even after being subjected to high retort treatment.

Hereinafter, the anchor coat layer 2, deposition layer 3, and gas barrier coating layer 4 will be described in detail.

(Substrate layer)

The substrate layer 1 serving as a support for the gas barrier coating layer 4 contains a thermoplastic resin. Examples of the thermoplastic resin include polyolefin resins, polyester resins, polyamide resins, polyether resins, acrylic resins, and natural polymer compounds (cellulose acetate, etc.). These materials may be used singly or may be used as a mixture of two or more.

Of these materials, polyolefin resins or polyester resins are preferred as the thermoplastic resin, from the perspective of heat resistance.

The polyolefin resins may include polyethylenes and polypropylenes but, from the perspective of retort resistance, polypropylenes are preferred.

If the polyolefin resin, as a thermoplastic resin, contained in the substrate layer 1 comprises a polypropylene, gas barrier laminates 10 in general tend to be deteriorated in gas barrier properties and adhesion to sealant layers after high retort treatment; however, the gas barrier laminate 10 has good gas barrier properties and good adhesion to the sealant layer even after being subjected to high retort treatment. Herein, the polypropylene may be a homopolypropylene or a propylene copolymer.

The polyester resins include polyethylene terephthalate (PET) and polyethylene naphthalate (PEN).

The substrate layer 1 may be a stretched or unstretched film, but is preferred to be a stretched film from the perspective of gas barrier properties. The stretched film may be a uniaxially or biaxially stretched film, but is preferred to be a biaxially stretched film from the perspective of improving heat resistance.

The thickness of the substrate layer 1 is not specifically limited but may be, for example, 0.1 mm or less. Specifically, however, the thickness of the substrate layer 1 may be 40 $\mu$m or less, more preferred to be 35 $\mu$m or less, and even more preferred to be 30 $\mu$m or less. If the thickness of the substrate layer 1 is 40 $\mu$m or less, flexibility of the gas barrier laminate 10 is further improved to further improve oxygen gas barrier properties after abuse, compared to the case where the thickness exceeds 40 $\mu$m. However, from the perspective of improving strength, the thickness of the substrate layer 1 is preferred to be 10 $\mu$m or more, and more preferred to be 12 $\mu$m or more.

The substrate layer 1 may contain additives, such as antistatic agents, UV absorbers, plasticizers, and lubricants, as necessary.

(Intermediate layer)

The anchor coat layer 2 as an intermediate layer is a layer for further improving adhesion between the substrate layer 1 and the deposition layer 3, and is provided between these layers.

Materials for forming the anchor coat layer 2 are not specifically limited as long as they can improve adhesion between the substrate layer 1 and the deposition layer 3. Such materials include the reaction products of organosilanes or organometallic compounds, polyol compounds, and isocyanate compounds. In other words, the anchor coat layer 2 can be said to be a urethane adhesive layer. Examples of the organosilanes include trifunctional organosilanes and hydrolysates of trifunctional organosilanes. Examples of the organometallic compounds include metal alkoxides and hydrolysates of metal alkoxides. Examples of metal elements contained in the organometallic compounds include Al, Ti and Zr. The hydrolysates of the organosilanes and the hydrolysates of the metal alkoxides may have at least one hydroxyl group. From the perspective of transparency, the polyol compounds are preferred to be acrylic polyols. The isocyanate compounds function primarily as crosslinking agents or curing agents. The polyol compounds and the isocyanate compounds may be monomers or may be polymers.

The thickness of the anchor coat layer 2 is not specifically limited as long as the adhesion between the substrate layer 1 and the deposition layer 3 is improved, but is preferred to be 30 nm or more. In this case, surface smoothness of the anchor coat layer 2 can be improved even more than that of the substrate layer 1 compared to the case where the anchor coat layer 2 has a thickness of less than 30 nm, and thus the thickness of the deposition layer 3 can be made more uniform, and the gas barrier properties can be further improved. Therefore, gas barrier properties of the gas barrier laminate 10 can be even more improved. The thickness of the anchor coat layer 2 is preferred to be 40 nm or more, and even more preferred to be 50 nm or more. If the thickness of the anchor coat layer 2 is increased, deterioration in water vapor barrier properties can be further suppressed when external forces such as of stretching are applied. The thickness of the anchor coat layer 2 is preferred to be 300 nm or less. In this case, flexibility of the gas barrier laminate 10 is further improved to further improve oxygen gas barrier properties thereof after abuse, compared to the case where the thickness of the anchor coat layer 2 is 300 nm or more. The thickness of the anchor coat layer 2 is more preferred to be 200 nm or less.

Instead of the anchor coat layer 2, the intermediate layer may be a layer obtained by modifying the surface of the substrate layer 1 through surface treatment such as corona treatment or plasma treatment. The plasma treatment may be a reactive ion etching (RIE) method.

(Deposition layer)

The deposition layer 3 is a layer formed by vapor deposition. Including the deposition layer 3, gas barrier properties of the gas barrier laminate 10 can be further improved. The deposition layer 3 comprises an inorganic material. Examples of the inorganic material include metals and metal oxides.

Metal elements constituting the metals or metal oxides may include at least one metal element selected from the group consisting of Si, Al, Mg, Sn, Ti and In. The metal oxides are preferred to be at least one selected from the group consisting of silicon oxides ($SiO_x$) and aluminum oxides ($AlO_x$). Since $SiO_x$ and $AlO_x$ both have good water vapor barrier properties, the gas barrier laminate 10 can be improved in water vapor barrier properties. Specifically, the metal oxides are preferred to be $SiO_x$. In this case, the gas barrier laminate 10 can have even better water vapor barrier properties.

The deposition layer 3 may be formed of a single layer or multiple layers.

The thickness of the deposition layer 3 is not specifically limited, but is preferred to be 5 nm or more. In this case, the gas barrier laminate 10 is further improved in gas barrier properties compared to the case where the thickness of the deposition layer 3 is less than 5 nm. The thickness of the deposition layer 3 is more preferred to be 8 nm or more, and even more preferred to be 10 nm or more.

The thickness of the deposition layer 3 is preferred to be 80 nm or less. In this case, flexibility of the gas barrier laminate 10 is further improved to further improve gas barrier properties thereof after abuse, compared to the case where the thickness of the deposition layer 3 exceeds 80 nm. Also, gas barrier properties of the gas barrier laminate 10 can be further improved after high retort treatment. The thickness of the deposition layer 3 may be 70 nm or less, or may be 60 nm or less.

(Gas barrier coating layer)

The gas barrier coating layer 4 is a layer covering the deposition layer 3 and having gas barrier properties, and is made of a cured product of a composition for forming a gas barrier coating layer.

On the surface of the gas barrier coating layer 4, the ratio of silicon atoms to carbon atoms (hereinafter also referred to as Si/C) as measured by X-ray photoelectron spectroscopy (hereinafter also referred to as XPS) is 0.25 to 0.90, and the peak half-width of the Si 2p orbital is 1.85 eV or less. In this case, the gas barrier coating layer 4 becomes softer and less likely to crack compared to the case where Si/C exceeds 0.90, and thus gas barrier properties of the gas barrier laminate 10 after high retort treatment can be further improved. Also, the gas barrier coating layer 4 becomes more resistant to hot water compared to the case where Si/C is less than 0.25, and thus gas barrier properties of the gas barrier laminate 10 after high retort treatment can be further improved.

In addition, further improvement can be achieved in adhesion between the gas barrier coating layer 4 and the sealant layer in the gas barrier laminate 10 after high retort treatment, compared to the case where the peak half-width of the Si 2p orbital exceeds 1.85 eV. The reasons for this are not known, but is speculated to be as follows.

Specifically, in the narrow spectrum of the Si 2p orbital, the peak appearing in the bonding energy region of 100 to 107 eV arises from various bonds (Si-O bond, Si-OH bond, SiC bond, etc.), and thus the half-width of the peak being large refers to that there are many types of bonds. The half-width being greater than 1.85 eV refers to that, in this state, there are many bonds, such as unreacted Si-OH bonds, other than Si-O bonds. In contrast, the half-width being 1.85 eV or less refers to that, in this state, there are not so many bonds, such as unreacted Si-OH bonds, other than Si-O bonds. Therefore, the gas barrier coating layer 4 in this state can suppress performance deterioration due to high retort treatment and, in particular, can suppress deterioration in adhesion between the gas barrier coating layer 4 and the sealant layer.

Si/C is calculated by performing a narrow-spectrum analysis using the following measuring device under the following measurement conditions. Specifically, narrow spectra of O 1s, N 1s, C 1s and Si 2p orbitals on the surface of the gas barrier coating layer 4 are acquired and, for the elements of O, N, C and Si, elemental quantitative values (at%) are calculated from the respective peak areas, using a relative sensitivity coefficient of 1.00 eV for C 1s, and 0.9 eV for Si 2p, to calculate Si/C using the obtained elemental quantitative values. It should be note that the ratio of silicon atoms to carbon atoms (Si/C) is an atomic ratio.

<Measuring device>

JPS-9030 type photoelectron spectrometer manufactured by JEOL Ltd.

<Measurement conditions>

(Spectrum sampling conditions)

Incident X-rays: MgKα (hv=1253.6 eV)

X-ray output: 100 W (10 kV·10 mA)

Measurement region: 6-mm diameter circular region

Photoelectron capture angle: 90°

(Measurement conditions)

Dwell time: 100 ms

Measurement step: 0.2 eV

Path energy: 10 eV

Number of times integrated: 5

The narrow spectra of O 1s, N 1s, C 1s and Si 2p orbitals on the surface of the gas barrier coating layer 4 acquired as above are subjected to charge correction, with the C-C bond peak in the narrow spectrum of the C1s orbital being 285.0 eV, to obtain a peak half-width of the Si 2p orbital within the range of 100 to 107 eV in the narrow spectrum of the Si 2p orbital after charge correction. The charge correction is performed, taking the difference between the obtained C-C bond peak position and 285.0 eV to be a peak shift, and shifting the energy positions of all the atoms by the peak shift.

The peak half-width of the Si 2p orbital refers to the width of the peak when a value P of the number of photoelectrons on the vertical axis of the narrow spectrum of the Si 2p orbital is a value expressed by the following Formula (3).

$$P=1/2(A+B) \qquad \dots (3)$$

In Formula (3), A represents the maximum value of the peak appearing in the bonding energy region of 100 to 107 eV in the narrow spectrum of the Si 2p orbital, and B represents the background value at the energy position corresponding to the maximum value of the above peak. The background is obtained through the Shirley method with 100 eV and 107 eV as the two ends of the peak. The peak half-width of the Si 2p orbital is specifically obtained using the SpecSurf Ver. 2.0 software provided with the photoelectron spectrometer mentioned above.

Si/C may be 0.90 or less, but is preferred to be 0.85 or less, more preferred to be 0.65 or less, even more preferred to be 0.55 or less, and most preferred to be 0.45 or less. If Si/C is 0.85 or less, gas barrier properties of the gas barrier laminate 10 after high retort treatment tend to be improved. Si/C may be 0.25 or more, but is preferred to be 0.30 or more, and more preferred to be 0.33 or more, from the perspective of improving adhesion between the sealant layer and the gas barrier coating layer 4.

The peak half-width of the Si 2p orbital may be 1.85 eV or less, but is preferred to be 1.75 eV or less. If the peak half-width of the Si 2p orbital is 1.75 eV or less, adhesion between the sealant layer and the gas barrier coating layer 4 tends to be further improved.

The peak half-width of the Si 2p orbital may, for example, be 0.7 eV or more.

The composition for forming the gas barrier coating layer contains a water-soluble polymer, a first silicon compound, and a second silicon compound.

Examples of the water-soluble polymer include polyvinyl alcohol resins, their modified forms, and polyacrylic acids. These materials can be used singly or in combination of two or more. Among them, polyvinyl alcohol resins or their modified forms are preferred as the water-soluble polymer. In this case, the composition, when cured, can impart the gas barrier laminate 10 with even better gas barrier properties. Also, even when cured, the composition can impart the gas barrier laminate 10 with even better flexibility and can further improve gas barrier properties after abuse.

If the water-soluble polymer is composed of a polyvinyl alcohol resin or its modified form, the degree of saponification of the water-soluble polymer is not specifically limited; however, from the perspective of improving gas barrier properties of the gas barrier laminate 10, the degree of saponification is preferred to be 95% or more, and more preferred to be 100%.

The degree of polymerization of the water-soluble polymer is not specifically limited; however, from the perspective of improving gas barrier properties of the gas barrier laminate 10, the polymerization degree is preferred to be 300 or more. The degree of polymerization of the water-soluble polymer is more preferred to be 450 to 2,400.

The water-soluble polymer content in the solid content is not specifically limited, but is preferred to be 25 mass% or more. In this case, the gas barrier laminate 10 can be further improved in gas barrier properties due to curing, even after being subjected to high retort treatment.

The water-soluble polymer content in the solid content is preferred to be 30 mass% or more, more preferred to be 40 mass% or more, and even more preferred to be 45 mass% or more. If the water-soluble polymer content in the solid content is 30 mass% or more, the gas barrier laminate 10 can be further improved in gas barrier properties due to curing, even after being subjected to high retort treatment, compared to the case where the water-soluble polymer content is less than 30 mass%.

The water-soluble polymer content in the solid content may be less than 100 mass%, but is preferred to be 80 mass% or less, more preferred to be 70 mass% or less, and even more preferred to be 60 mass% or less. If the water-soluble polymer content in the solid content is 80 mass% or less, adhesion between the gas barrier coating layer 4 and the sealant layer in the gas barrier laminate 10 after high retort treatment can be further improved, compared to the case where the water-soluble polymer content exceeds 80 mass%.

The first silicon compound contains at least one of a silicon alkoxide and a hydrolysate thereof. The silicon alkoxide is preferred to be expressed by the following General Formula (1). In this case, adhesion between the gas barrier coating layer 4 and the deposition layer 3 can be improved, and thus interlaminar delamination of the gas barrier laminate 10 can be suppressed.

$$Si(OR^1)_4 \ ... \qquad (1)$$

In General Formula (1), $OR^1$ represents a hydrolyzable group. Examples of $R^1$ include alkyl groups and $-C_2H_4OCH_3$. Examples of the alkyl groups include methyl groups and ethyl groups. Of these groups, ethyl groups are preferred. In this case, the silicon alkoxide becomes tetraethoxysilane (TEOS) and, after hydrolysis, can be relatively stabilized in an aqueous solvent.

The first silicon compound content in the solid content is not specifically limited; however, is preferred to be 25 mass% or more, more preferred to be 30 mass% or more, and even more preferred to be 40 mass% or more. In this case, the gas barrier laminate 10 can be further improved in gas barrier properties due to curing, even after being subjected to high retort treatment, compared to the case where the first silicon compound content in the solid content is less than 25 mass%.

The first silicon compound content in the solid content is preferred to be 70 mass% or less, more preferred to be 60 mass% or less, and even more preferred to be 50 mass% or less. In this case, the gas barrier laminate 10 can be further improved in gas barrier properties due to curing, even after being subjected to high retort treatment, compared to the case where the first silicon compound content exceeds 70 mass%.

The second silicon compound, which is a silane coupling agent as a curing agent, contains at least one of a silicon alkoxide and a hydrolysate thereof. The silicon alkoxide is preferred to be expressed by the following General Formula (2). In this case, adhesion between the gas barrier coating layer 4 and the deposition layer 3 can be improved, and thus interlaminar delamination of the gas barrier laminate 10 can be suppressed.

$$(R^2Si(OR^3)_3)_n \ ... \qquad (2)$$

In General Formula (2), $OR^2$ represents a monovalent organic group, $OR^3$ represents a hydrolyzable group, and n represents an integer greater than or equal to 1.

The monovalent organic group represented by $R^2$ may be a vinyl group, epoxy group, mercapto group, or amino group, or a monovalent organic group containing an isocyanate group. Of these groups, an isocyanate group is preferred as the monovalent organic group. In this case, the composition can have better hot water resistance due to curing, and thus the gas barrier laminate 10 can be imparted with greater lamination strength even after being subjected to high retort treatment.

$R^3$ may be an alkyl group or $-C_2H_4OCH_3$. Examples of the alkyl group include methyl groups and ethyl groups. Of these groups, methyl groups are preferred. In this case, hydrolysis takes place faster.

It should be noted that $R^3$ may be the same as or different from $R^2$. The groups of $R^3$ may be the same as or different from each other.

n represents an integer greater than or equal to 1. If n is 1, the silane coupling agent represents a monomer and, if n is 2 or greater, the silane coupling agent represents a multimer. n is preferred to be 3. In this case, the gas barrier coating layer 4 can be further improved in hot water resistance, and thus the gas barrier laminate 10 can be imparted with greater lamination strength even after being subjected to high retort treatment.

Examples of the second silicon compound (silane coupling agent) include silane coupling agents having a vinyl group such as vinyltrimethoxysilane and vinyltriethoxysilane; silane coupling agents having an epoxy group such as 3-glycidoxypropyltrimethoxysilane, 3-glycidoxypropyltriethoxysilane, 3-glycidoxypropylmethyldimethoxysilane, and 3-glycidoxypropylethyldiethoxysilane; silane coupling agents having a mercapto group such as 3-mercaptopropyltrimethoxysilane and 3-mercaptopropylmethyldimethoxysilane; silane coupling agents having an amino group such as 3-aminopropyltrimethoxysilane and 3-aminopropyltriethoxysilane; and silane coupling agents having an isocyanate group such as 3-isocyanatepropyltriethoxysilane and 1,3,5-tris(3-methoxysilylpropyl)isocyanurate. These silane coupling agents may be used singly or in combination of two or more.

The second silicon compound content in the solid content is not specifically limited; however, is preferred to be 3 mass% or more, more preferred to be 5 mass% or more, and even more preferred to be 7 mass% or more. **In** this case, the gas barrier laminate 10 can be imparted with greater lamination strength due to curing, even after being subjected to high retort treatment, compared to the case where the second silicon compound content in the solid content is less than 3 mass%.

The second silicon compound content in the solid content is preferred to be 20 mass% or less, more preferred to be 15 mass% or less, and even more preferred to be 12 mass% or less. **In** this case, the water-soluble polymer content and the first silicon compound content in the gas barrier coating layer 4 are relatively increased and thus good gas barrier properties can be maintained, compared to the case where the second silicon compound content in the solid content exceeds 20 mass%.

When calculating the contents of the water-soluble polymer, first silicon compound, and second silicon compound in the solid content, the mass of the first silicon compound is converted to the mass of $SiO_2$ if the first silicon compound contains at least one of a silicon alkoxide expressed by General Formula (1) and a hydrolysate thereof, and the mass of the second silicon compound is converted to the mass of $(R^2Si(OH)_3)_n$ if the second silicon compound contains at least one of a silicon alkoxide expressed by General Formula (2) and a hydrolysate thereof.

(Other components in solid content)

The solid content may further contain known additives such as a dispersant, stabilizer, and viscosity modifier, as necessary, as long as the gas barrier properties of the gas barrier coating layer 4 are not impaired.

(Total content of components in solid content)

The total content of the water-soluble polymer, first silicon compound, and second silicon compound (silane coupling agent) in the solid content is not specifically limited, but is usually preferred to be 95 mass% or more, more preferred to be 97 mass% or more, and even more preferred to be 100 mass%.

(Liquid)

An aqueous medium is usually used as a liquid in which the solid content mentioned above is dissolved or dispersed. The aqueous medium may be water, hydrophilic organic solvents, or mixtures thereof. Examples of the hydrophilic organic solvents include alcohols such as methanol, ethanol, and isopropanol; ketones such as acetone and methyl ethyl ketone; ethers such as tetrahydrofuran; cellosolves; carbitols; and nitriles such as acetonitrile. These materials can be used singly or in combination of two or more.

The aqueous medium is preferred to be an aqueous medium composed of water alone, or an aqueous medium containing water as the main component. If the aqueous medium contains water as the main component, water content in the aqueous medium is preferred to be 70 mass% or more, and more preferred to be 80 mass% or more.

The thickness of the gas barrier coating layer 4 is not specifically limited, but is preferred to be 100 nm or more.

Also, gas barrier properties of the gas barrier laminate 10 can be further improved even after being subjected to high retort treatment, compared to the case where the thickness of the gas barrier coating layer 4 is less than 100 nm.

From the perspective of improving gas barrier properties, the thickness of the gas barrier coating layer 4 is preferred to be 150 nm or more, and even more preferred to be 200 nm or more.

However, the thickness of the gas barrier coating layer 4 is preferred to be 700 nm or less. Compared to the case where the thickness of the gas barrier coating layer 4 exceeds 700 nm, the gas barrier laminate 10 becomes less likely to curl and becomes easier to use as a gas barrier laminate of a packaging film included in a packaging bag.

From the perspective of further improving flexibility of the gas barrier laminate 10, the thickness of the gas barrier coating layer 4 is more preferred to be 500 nm or less, and even more preferred to be 400 nm or more.

<Method of producing gas barrier laminate>

The following description addresses a method of producing the gas barrier laminate 10.

First, a substrate layer 1 is prepared.

Next, an anchor coat layer 2 is formed on one surface of the substrate layer 1.

Specifically, a composition for forming an anchor coat layer 2 is applied to one surface of the substrate layer 1, followed by heating and drying to thereby form an anchor coat layer 2. In this case, the heating temperature may be 50 to 200°C, for example; and the drying time may be about 10 seconds to 10 minutes, for example.

Next, a deposition layer 3 is formed on the anchor coat layer 2.

The deposition layer 3 can be formed using, for example, a vacuum deposition method. The vacuum deposition method may be physical vapor deposition or chemical vapor deposition. The physical vapor deposition may be vacuum deposition, sputtering deposition, ion plating, or the like. The physical vapor deposition particularly preferred to be used is vacuum deposition. The vacuum deposition may be resistance heating vacuum deposition, electron beam (EB) heating vacuum deposition, or induction heating vacuum deposition. The chemical vapor may be thermal CVD, plasma CVD, optical CVD, or the like.

Next, a gas barrier coating layer 4 is formed on the deposition layer 3. The gas barrier coating layer 4 is formed such that, when the surface of the gas barrier coating layer 4 is subjected to a quantitative elemental analysis through X-ray photoelectron spectroscopy, the ratio of silicon atoms and carbon atoms (Si/C) will be 0.25 to 0.90, and the peak half-width appearing at 100 to 107 eV in the narrow spectrum of the Si 2p orbital will be 1.85 eV or less on the surface of the gas barrier coating layer 4.

The gas barrier coating layer 4 can be formed, for example, by applying a composition for forming a gas barrier coating layer onto the deposition layer 3 and curing the composition. Curing of the solid content herein refers to the water-soluble polymer, first silicon compound, and second silicon compound in the solid content being reacted with each other and integrated.

A known method can be used as a method of applying the composition for forming a gas barrier coating layer. Specifically, the coating method may be wet deposition, such as gravure coating, dip coating, reverse coating, wire bar coating, and die coating.

Curing can be performed by heating or the like, for example.

If curing is performed by heating, the gas barrier coating layer 4 may be heated at a temperature, for example, of 65 to 130°C for 5 seconds to 2 minutes, while adjusting the mass ratio of PVA, TEOS and SC agent.

In this way, a gas barrier laminate 10 is obtained.

<Packaging film>

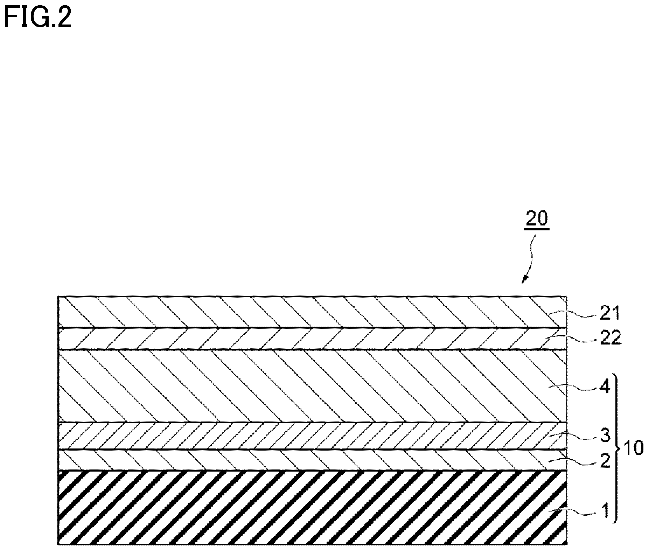

Referring to Fig. 2, an embodiment of a packaging film according to the present disclosure will be described. In Fig. 2, like reference signs are given to like components of Fig. 1 to omit repeated description.

Fig. 2 is a cross-sectional view illustrating an embodiment of a packaging film according to the present disclosure.

As shown in Fig. 2, a packaging film 20 includes a gas barrier laminate 10 and a sealant layer 21 which is laminated on the gas barrier laminate 10. The sealant layer 21 is disposed on the gas barrier coating layer 4 side of the substrate layer 1 of the gas barrier laminate 10. As shown in Fig. 2, in the gas barrier laminate 10, the gas barrier coating layer 4 and the sealant layer 21 may be adhered to each other via an adhesive layer 22, or they may be directly adhered to each other.

Due to including the gas barrier laminate 10, the packaging film 20 has good gas barrier properties even after being subjected to high retort treatment, and can suppress delamination between the sealant layer 21 and the gas barrier coating layer 4 in the gas barrier laminate 10 constituting the packaging film 20.

Examples of the material for forming the adhesive layer 22 include polyester-isocyanate resins, urethane resins, and polyether resins. In order to use the packaging film 20 for retort applications, a two-part curing type urethane adhesive that is resistant to retort treatment can be preferably used.

(Sealant layer)

Materials used for the sealant layer 21 may include thermoplastic resins such as polyolefin resins and polyester resins but, in general, polyolefin resins are used. Specifically, the polyolefin resins include ethylene resins such as low-density polyethylene resins (LDPEs), medium-density polyethylene resins (MDPEs), linear low-density polyethylene resins (LLDPEs), ethylene-vinyl acetate copolymers (EVAs), ethylene-$\alpha$-olefin copolymers, and ethylene-(meth)acrylic acid copolymers; polypropylene resins such as homopolypropylene resins (PPs), propylene-ethylene random copolymers, propylene-ethylene block copolymers, and propylene-$\alpha$-olefin copolymers; and mixtures of these materials. The material for forming the sealant layer 21 can be appropriately selected from among the thermoplastic resins mentioned above, depending on usage and temperature conditions of boiling treatment, high retort treatment, etc.; however, if the substrate layer 1 contains a polyolefin resin, the material for forming the sealant layer 21 is preferred to be a polyolefin resin, from the perspective of recyclability. If the substrate layer 1 contains a polyester resin, the material for forming the sealant layer 21 is preferred to be a polyester resin, from the perspective of recyclability.

The thermoplastic resin constituting the sealant layer 21 may be stretched or unstretched; however, from the perspective of lowering the melting point and making heat sealing easier, the thermoplastic resin is preferred to be unstretched.

The thickness of the sealant layer 21 is appropriately determined depending on the mass of the contents and the shape of the packaging bag and is not specifically limited; however, from the perspective of flexibility and adhesion of the packaging film 20, the thickness is preferred to be 30 $\mu$m to 150 $\mu$m.

<Packaged product>

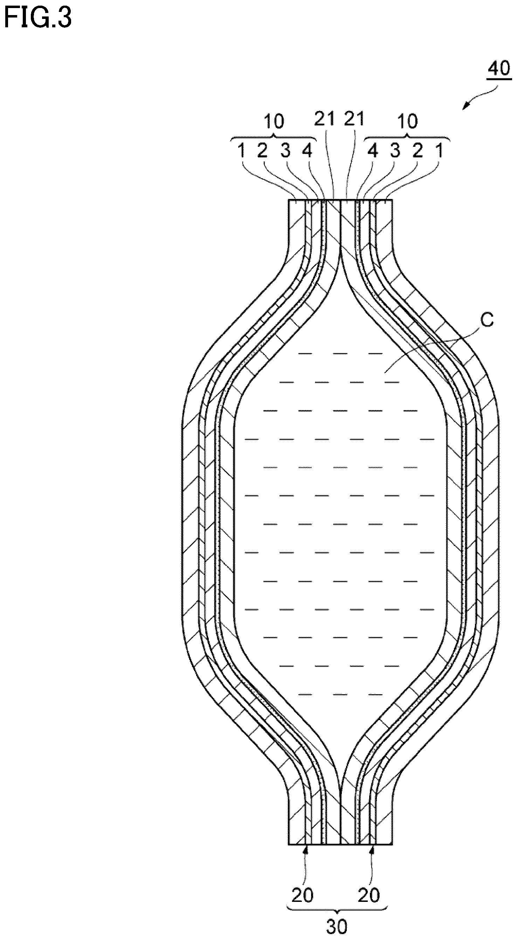

Referring to Fig. 3, an embodiment of a packaged product according to the present disclosure will be described. Fig. 3 is a side view illustrating an embodiment of a packaged product according to the present disclosure. In Fig. 3, like reference signs are given to like components of Fig. 1 or 2 to omit repeated description.

As shown in Fig. 3, a packaged product 40 includes a packaging container 30 and contents C filled in the packaging container 30. The packaging container 30 shown in Fig. 3 has been obtained using two packaging films 20 and heat-sealing the peripheral portions of the packaging films 20 with the sealant layers 21 faced each other. **In** Fig. 3, the adhesive layers 22 of the packaging films 20 are omitted.

The packaged product 40 includes the packaging container 30 which has good gas barrier properties even after being subjected to high retort treatment and which can suppress delamination between the gas barrier coating layer 4 and the sealant layer 21 included in the gas barrier laminate of each packaging film 20. Therefore, the packaged product 40 can suppress deterioration in quality of the contents C caused by oxygen contamination, over a long period of time.

The packaging container 30 can also be obtained by folding a single packaging film 20, and heat-sealing the peripheral portions of the packaging film 20 with surfaces of the sealant layer 21 faced each other.

Examples of the packaging container 30 include packaging bags, laminate tube containers, and paper containers for liquids.

The contents C are not specifically limited but may be food, liquids, pharmaceuticals, electronic parts, etc.

The gist of the present disclosure is as follows.

[1] A gas barrier laminate comprising a substrate layer containing a thermoplastic resin, a deposition layer, and a gas barrier coating layer in this order, wherein

when the surface of the gas barrier coating layer is subjected to a quantitative elemental analysis through X-ray photoelectron spectroscopy, the ratio of silicon atoms and carbon atoms (Si/C) is 0.25 to 0.90, and the peak half-width appearing at 100 to 107 eV in a narrow spectrum of an Si 2p orbital is 1.85 eV or less on the surface of the gas barrier coating layer.

[2] The gas barrier laminate according to [1], wherein the thermoplastic resin comprises a polypropylene.

[3] The gas barrier laminate according to [1] or [2] further including an anchor coat layer between the substrate layer and the deposition layer.

[4] The gas barrier laminate according to any one of [1] to [3], wherein the gas barrier coating layer comprises a cured product of a composition containing a water-soluble polymer and at least one silicon compound selected from the group consisting of a silicon alkoxide expressed by the following General Formula (1), a hydrolysate of the silicon alkoxide expressed by the following General Formula (1), a silicon alkoxide expressed by the following General Formula (2), and a hydrolysate of the silicon alkoxide expressed by the following General Formula (2).

$$Si(OR^1)_4 \ldots \qquad (1)$$

(In General Formula (1), $OR^1$ represents a hydrolyzable group.)

$$(R^2Si(OR^3)_3)_n \ldots \qquad (2)$$

(In General Formula (2), $OR^2$ represents a monovalent organic group, $OR^3$ represents a hydrolyzable group, and n represents an integer greater than or equal to 1.)

[5] The gas barrier laminate according to any one of [1] to [4], wherein

the gas barrier coating layer comprises a cured product of a composition containing a water-soluble polymer, a first silicon compound, and a second silicon compound;

the first silicon compound contains at least one of a silicon alkoxide expressed by the following General Formula (1) and a hydrolysate thereof; and

the second silicon compound contains at least one of a silicon alkoxide expressed by the following General Formula (2) and a hydrolysate thereof.

$$Si(OR^1)_4 \ldots \qquad (1)$$

(In General Formula (1), $OR^1$ represents a hydrolyzable group.)

$$(R^2Si(OR^3)_3)_n \ldots \qquad (2)$$

(In General Formula (2), $OR^2$ represents a monovalent organic group, $OR^3$ represents a hydrolyzable group, and n represents an integer greater than or equal to 1.)

[6] The gas barrier laminate according to any one of [1] to [5], wherein the gas barrier coating layer has a thickness of 100 nm or more and 700 nm or less.

[7] The gas barrier laminate according to [4] or [5], wherein the water-soluble polymer in the gas barrier coating layer comprises a polyvinyl alcohol resin or a modified form thereof.

[8] The gas barrier laminate according to any one of [1] to [7], wherein the deposition layer contains at least one selected from an aluminum oxide and a silicon oxide.

[9] A packaging film including the gas barrier laminate according to any one of [1] to [8] and a sealant layer.

[10] A packaging container including the packaging film according to [9].

[11] A packaged product including the packaging container according to [10] and contents filled in the packaging container.

Examples

In the following, the present disclosure will be more specifically described based on examples; however, the present disclosure should not be limited to the following examples.

<Preparation of coating liquid>

Coating liquids A to C were prepared as compositions for forming gas barrier coating layers which are used for examples and comparative examples.

(Coating liquid A)

Liquid A: A 5 mass% aqueous solution of polyvinyl alcohol (PVA, product name: Kuraray POVAL 60-98, manufactured by Kuraray Co., Ltd.)

(Coating liquid B)

A solution (hydrolysis solution of TEOS) obtained by mixing tetraethoxysilane as a silicon alkoxide or the first silicon alkoxide (TEOS, product name: KBE04, solid content: 100%, manufactured by Shin-Etsu Chemical Co., Ltd.), methanol (manufactured by Kanto Chemical Co., Inc.), and 0.1N hydrochloric acid (manufactured by Kanto Chemical Co., Inc.) in a mass ratio of 17/10/73 and hydrolyzing the mixture

(Coating liquid C)

A solution obtained by diluting and adjusting a silane coupling agent (hereinafter referred to as SC agent) or 1,3,5-tris(3-methoxysilylpropyl)isocyanurate (SC) as the second silicon alkoxide with a mixed solution of water/IPA=1/1 by mass ratio so that the solid content was 5 mass% (($R^2Si(OH)_3$)$_n$ conversion, where $R^2$ was $-(CH_2)_3NC=O-$ and n was 3)

<Preparation of composition for forming anchor coat layer>

An AC1 layer-forming composition and an AC2 layer-forming composition were prepared as follows as compositions for forming anchor coat layers used for examples or comparative examples.

(AC1 layer-forming composition)

The AC1 layer-forming composition was prepared as follows as a composition for forming an anchor coat layer.
An acrylic polyol and tolylene diisocyanate were mixed together so that the number of OH groups of the acrylic polyol was equivalent to the number of NCO groups of the tolylene diisocyanate, and the mixture was diluted with ethyl acetate so that the total solid content (total mass of the acrylic polyol and tolylene diisocyanate) was 5 mass%. β-(3,4-epoxycyclohexyl)trimethoxysilane was further added to and mixed with the diluted mixture so that the content thereof was 5 parts by mass with respect to the total mass, i.e., 100 parts by mass, of the acrylic polyol and tolylene diisocyanate, thereby preparing a composition for forming an anchor coat layer (anchor coating agent).

(AC2 layer-forming composition)

The AC2 layer-forming composition was prepared as follows as a composition for forming an anchor coat layer. Specifically, the AC2 layer-forming composition was prepared by mixing Takelac WPB-341 (manufactured by Mitsui Chemicals, Inc.) with isocyanate silane KBE-403 (manufactured by Shin-Etsu Chemical Co., Ltd.) in a solid content ratio of 9:1.

<Preparation of gas barrier laminate>

(Example 1)

A gas barrier laminate was prepared using a roll-to-roll method as follows. First, a polyethylene film as a substrate layer with a thickness of 20 μm (product name: ME-1 manufactured by Mitsui Chemicals Tohcello, Inc.) was attached to an unwinder, a conveyor, and a take-up device.
Next, the substrate layer was unrolled, and the AC1 layer-forming composition as a composition for forming an anchor coat layer was applied with a thickness of 120 nm to the substrate layer under conveyance, followed by drying at 90°C for 5 seconds to form an anchor coat 1 layer (AC1 layer) as an intermediate layer.

Next, an $SiO_x$ film (deposition layer) was formed with a thickness of 25 nm on the AC1 layer. In this case, the $SiO_x$ film was formed by introducing oxygen at a pressure of $1 \times 10^{-2}$ Pa, while evaporating a silicon ingot by electron beam heating using an electron-beam heating type vacuum deposition device.

Next, 3 solutions, i.e., the coating liquids A, B and C, were mixed with each other to prepare a coating liquid. The coating liquid was prepared such that the mass ratio between PVA, TEOS ($SiO_2$ conversion), and SC agent (($R^2Si(OH)_3)_n$ conversion) as the solid content was 45/45/10. The coating liquid was applied to the deposition layer using gravure coating with a dry thickness shown in Table 1, followed by heating at a temperature shown in Table 1 for 1 minute to form a gas barrier coating layer.

Thus, a gas barrier laminate was obtained, in which a substrate layer, deposition layer, and gas barrier coating layer were laminated in this order.

The gas barrier laminate obtained in this way was subjected to a narrow-spectrum analysis under the following measurement conditions using the following measuring device to acquire narrow spectra of O 1s, N 1s, C 1s, and Si 2p orbitals on the surface of the gas barrier coating layer.

For the elements O, N, C and Si, elemental quantitative values (at%) were calculated from the respective peak areas, using a relative sensitivity coefficient of 2.28 eV for O 1s, 1.61 eV for N 1s, 1.00 eV for C 1s, and 0.9 eV for Si 2p, and Si/C was calculated using the obtained elemental quantitative values. The results are shown in Table 1.

Next, charge correction was performed for each narrow spectrum, with the C-C bond peak in the narrow spectrum of the C1s orbital being 285.0 eV.

Then, a peak half-width of the Si 2p orbital (a half-width of the peak appearing in the bonding energy region of 100 to 107 eV in the narrow spectrum of the Si 2p orbital) was obtained using the SpecSurf Ver. 2.0 software provided with the photoelectron spectrometer mentioned above. The results are shown in Table 1.

<Measuring device>

JPS-9030 type photoelectron spectrometer manufactured by JEOL Ltd.

<Measurement conditions>

(Spectrum sampling conditions)

Incident X-rays: MgK$\alpha$ (hv=1,253.6 eV)

X-ray output: 100 W (10 kV·10 mA)

Measurement region: 6-mm diameter circular region

Photoelectron capture angle: 90°

(Measurement conditions)

Dwell time: 100 ms

Measurement step: 0.2 eV

Path energy: 10 eV

Number of times integrated: 5

(Examples 2 to 7 and Comparative Examples 1 to 3)

A gas barrier laminate was prepared as in Example 1 except that, when forming a gas barrier coating layer by preparing a coating liquid, the mass ratio (mass%) of PVA, TEOS ($SiO_2$ conversion), and SC agent (($R^2Si(OH)_3)_n$

conversion) in the solid content, heating temperature, and thickness of the gas barrier coating layer were set to the values shown in Table 1.

For the gas barrier laminate obtained in this way, Si/C was calculated and a peak half-width of the Si 2p orbital was obtained as in Example 1. The results are shown in Table 1.

(Example 8)

A gas barrier laminate was prepared as in Example 1 except that, when forming an anchor coat layer as an intermediate layer, the AC2 layer-forming composition was used as a composition for forming an anchor coat layer to form an AC2 layer with a thickness of 1,500 nm, and when forming a gas barrier coating layer by preparing a coating liquid, the mass ratio (mass%) of PVA, TEOS ($SiO_2$ conversion), and SC agent ($(R^2Si(OH)_3)_n$ conversion) in the solid content was set to the value shown in Table 1.

For the gas barrier laminate obtained in this way, Si/C was calculated and a peak half-width of the Si 2p orbital was obtained as in Example 1. The results are shown in Table 1.

(Example 9)

A gas barrier laminate was prepared as in Example 1 except that, when forming a deposition layer, the type and thickness of the deposition layer were set to the values shown in Table 1, and when forming a gas barrier coating layer by preparing a coating liquid, the mass ratio (mass%) of PVA, TEOS ($SiO_2$ conversion), and SC agent ($(R^2Si(OH)_3)_n$ conversion) in the solid content was set to the value shown in Table 1.

For the gas barrier laminate obtained in this way, Si/C was calculated and a peak half-width of the Si 2p orbital was obtained as in Example 1. The results are shown in Table 1.

(Example 10)

A gas barrier laminate was prepared as in Example 1 except that, instead of forming an anchor coat layer as an intermediate layer, the surface of the substrate layer was modified by reactive ion etching (RIE) to form an RIE layer as an intermediate layer, and when forming a gas barrier coating layer by preparing a coating liquid, the mass ratio (mass%) of PVA, TEOS ($SiO_2$ conversion), and SC agent ($(R^2Si(OH)_3)_n$ conversion) in the solid content was set to the value shown in Table 1.

For the gas barrier laminate obtained in this way, Si/C was calculated and a peak half-width of the Si 2p orbital was obtained as in Example 1. The results are shown in Table 1.

[Preparation of laminate film]

A laminate film with a two-layer structure was prepared by affixing an unstretched polypropylene film (product name: Torayfan ZK207 manufactured by Toray Industries, Inc.) with a thickness of 60 $\mu$m to the gas barrier coating layer side of the gas barrier laminate prepared in each of the examples and the comparative examples via a two-part curing type urethane adhesive (product name: A525/A52) using a dry laminate method.

[Evaluations]

(High retort treatment)

Each laminate film prepared as described above was cut to a size of 315 mm long × 230 mm wide as a packaging film, and the cut film was folded in half and heat-sealed on three sides to prepare a pouch having an opening. Water was filled in the pouch and the opening was heat-sealed to obtain a sealed pouch. The obtained sealed pouch was subjected to high retort treatment at 130°C for 60 minutes using a hot-water storage retort apparatus.

(Gas barrier properties)

In order to evaluate gas barrier properties of the laminate film after high retort treatment, oxygen permeability was measured. The oxygen permeability was measured under conditions of measurement area of 50 cm$^2$, temperature of 30°C, and a relative humidity of 70% using an oxygen permeability measuring device (OXTRAN2/20 manufactured by Modern Control Inc.). The measuring method was based on JIS K-7126 B (equal-pressure method) and ASTM D3985-81, and the measured values were expressed in a unit of [cc/m$^2$·day·atm]. The results are shown in Table 1. If the oxygen permeability was 5.0 cc/m$^2$·day·atm or less, the laminate film was determined to have good gas barrier properties.

(Adhesion)

In order to evaluate adhesion between the gas barrier laminate and the sealant layer in each laminate film after high retort treatment, the filled-in water was removed and then a lamination strength between the gas barrier coating layer and the unstretched polypropylene film was measured. Measurements were performed according to JIS K 6854 with a test width of 15 mm, peel speed of 300 mm/min, and T-type peel angle. The measured values were expressed in a unit of [N/15 mm]. The results are shown in Table 1. If the lamination strength was 2.0 N/15 mm or more, adhesion between the gas barrier laminate and the sealant layer in the laminate film was determined to be good.

[Table 1]

| | Intermediate layer | | Deposition layer | | Gas barrier coating layer | | | | | | | Evaluation | |
|---|---|---|---|---|---|---|---|---|---|---|---|---|---|
| | Type | Thickness (nm) | Type | Thickness (nm) | Mass ratio of solid content (mass%) | | | Thickness (nm) | Heating temp. (°C) | Si/C | Peak half-width of Si2p orbital (eV) | Gas barrier properties | Adhesion |
| | | | | | PVA | TEOS | SC agent | | | | | Oxygen permeability (cc/m²·day·atm) | Laminate strength (N/15 mm) |
| Ex. 1 | AC1 layer | 120 | SiOx | 25 | 45 | 45 | 10 | 320 | 80 | 0.37 | 1.70 | 0.8 | 3.8 |
| Ex. 2 | AC1 layer | 120 | SiOx | 25 | 25 | 70 | 5 | 320 | 80 | 0.82 | 1.69 | 2.0 | 4.1 |
| Ex. 3 | AC1 layer | 120 | SiOx | 25 | 45 | 45 | 10 | 320 | 90 | 0.37 | 1.66 | 0.6 | 4.0 |
| Ex. 4 | AC1 layer | 120 | SiOx | 25 | 50 | 40 | 10 | 320 | 80 | 0.28 | 1.73 | 1.1 | 2.6 |
| Ex. 5 | AC1 layer | 120 | SiOx | 25 | 45 | 45 | 10 | 150 | 80 | 0.37 | 1.70 | 1.5 | 3.2 |
| Ex. 6 | AC1 layer | 120 | SiOx | 25 | 45 | 45 | 10 | 90 | 80 | 0.37 | 1.70 | 4.3 | 3.0 |
| Ex. 7 | AC1 layer | 120 | SiOx | 25 | 48 | 45 | 7 | 650 | 80 | 0.35 | 1.70 | 0.8 | 2.9 |
| Ex. 8 | AC2 layer | 1,500 | SiOx | 25 | 48 | 45 | 7 | 320 | 80 | 0.35 | 1.70 | 0.6 | 2.2 |
| Ex. 9 | AC1 layer | 120 | AlOx | 10 | 48 | 45 | 7 | 320 | 80 | 0.35 | 1.70 | 4.5 | 2.5 |
| Ex. 10 | RIE layer | - | SiOx | 25 | 48 | 45 | 7 | 320 | 80 | 0.35 | 1.70 | 3.5 | 2.5 |
| Comp. Ex. 1 | AC1layer | 120 | SiOx | 25 | 85 | 5 | 10 | 320 | 80 | 0.21 | 2.05 | 1.2 | 0.7 |
| Comp. Ex. 2 | AC1 layer | 120 | SiOx | 25 | 20 | 70 | 10 | 320 | 80 | 1.02 | 1.66 | 6.1 | 4.0 |
| Comp. Ex. 3 | AC1 layer | 120 | SiOx | 25 | 45 | 45 | 10 | 320 | 25 | 0.37 | 1.87 | 1.0 | 0.8 |

As can be seen from the results shown in Table 1, the gas barrier laminates of Examples 1 to 10 were found to have good gas barrier properties even after being subjected to high retort treatment and to have good adhesion to the sealant layer.

As described above, the gas barrier laminate according to the present disclosure was confirmed to have good gas barrier properties even after being subjected to high retort treatment and to have good adhesion to the sealant layer.

[Reference Signs List]

1      Substrate layer

3      Deposition layer

4      Gas barrier coating layer

10      Gas barrier laminate

20      Packaging film

21      Sealant layer

30      Packaging container

40      Packaged product

**Claims**

**1.** A gas barrier laminate comprising a substrate layer containing a thermoplastic resin, a deposition layer, and a gas barrier coating layer in this order, wherein
in quantitative elemental analysis of a surface of the gas barrier layer by X-ray photoelectron spectroscopy, a ratio of silicon atoms and carbon atoms (Si/C) is 0.25 to 0.90, and a half-width of a peak appearing in a bonding energy region of 100 to 107 eV in a narrow spectrum of an Si 2p orbital is 1.85 eV or less on the surface of the gas barrier coating layer.

**2.** The gas barrier laminate according to claim 1, wherein the thermoplastic resin comprises a polypropylene.

**3.** The gas barrier laminate according to claim 1, further comprising an anchor coat layer between the substrate layer and the deposition layer.

**4.** The gas barrier laminate according to claim 1, wherein

the gas barrier coating layer comprises a cured product of a composition containing a water-soluble polymer, a first silicon compound, and a second silicon compound;
the first silicon compound contains at least one of a silicon alkoxide expressed by the following General Formula (1) and a hydrolysate thereof; and
the second silicon compound contains at least one of a silicon alkoxide expressed by the following General Formula (2) and a hydrolysate thereof

$$Si(OR^1)_4 \ldots \quad (1)$$

(In General Formula (1), $OR^1$ represents a hydrolyzable group.)

$$(R^2Si(OR^3)_3)_n \ldots \quad (2)$$

(In General Formula (2), $OR^2$ represents a monovalent organic group, $OR^3$ represents a hydrolyzable group, and n represents an integer greater than or equal to 1.)

5. The gas barrier laminate according to claim 1, wherein the gas barrier coating layer has a thickness of 100 nm or more and 700 nm or less.

6. The gas barrier laminate according to claim, 4, wherein the water-soluble polymer in the gas barrier coating layer comprises a polyvinyl alcohol resin or a modified form thereof.

7. The gas barrier laminate according to any one of claims 1 to 6, wherein the deposition layer contains at least one selected from an aluminum oxide and a silicon oxide.

8. A packaging film comprising the gas barrier laminate according to any one of claims 1 to 6 and a sealant layer.

9. A packaging container comprising the packaging film according to claim 8.

10. A packaged product comprising the packaging container according to claim 9 and contents filled in the packaging container.

FIG.1

FIG.2

FIG.3

## INTERNATIONAL SEARCH REPORT

| International application No. |
|---|
| **PCT/JP2023/021855** |

**A. CLASSIFICATION OF SUBJECT MATTER**

***B32B 9/00***(2006.01)i; ***B32B 27/32***(2006.01)i; ***B65D 65/40***(2006.01)i
FI:  B32B9/00 A; B32B27/32 Z; B65D65/40 A

According to International Patent Classification (IPC) or to both national classification and IPC

**B. FIELDS SEARCHED**

Minimum documentation searched (classification system followed by classification symbols)

  B32B1/00-43/00; B65D65/40

Documentation searched other than minimum documentation to the extent that such documents are included in the fields searched

  Published examined utility model applications of Japan 1922-1996
  Published unexamined utility model applications of Japan 1971-2023
  Registered utility model specifications of Japan 1996-2023
  Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2018-158530 A (TOPPAN PRINTING CO., LTD.) 11 October 2018 (2018-10-11) claims, paragraphs [0021], [0071]-[0075], table 1 | 1-10 |
| X | WO 2021/020400 A1 (TOPPAN PRINTING CO., LTD.) 04 February 2021 (2021-02-04) paragraphs [0073]-[0083], examples 1-10 | 1-10 |
| X | WO 2020/129291 A1 (TOPPAN PRINTING CO., LTD.) 25 June 2020 (2020-06-25) claims, paragraph [0094], table 1, paragraphs [0100]-[0102], examples 1, 4-6, table 5 | 1, 3-10 |
| A | JP 2020-29095 A (DAINIPPON PRINTING CO., LTD.) 27 February 2020 (2020-02-27) claims, paragraphs [0008], [0032], [0048], [0051], [0087]-[0104], tables 1-4 | 1-10 |
| A | JP 2015-212069 A (OIKE IND. CO., LTD.) 26 November 2015 (2015-11-26) claims, paragraphs [0031], [0036], [0041], [0051]-[0056], [0063], table 1, paragraphs [0065]-[0073] | 1-10 |
| A | JP 7072117 B1 (TOKYO PRINTING INK MFG. CO., LTD.) 19 May 2022 (2022-05-19) claims, paragraphs [0008], [0031], [0041]-[0049], [0054]-[0058], table 1, paragraph [0062] | 1-10 |

☑ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **07 September 2023** | **19 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**

International application No.

**PCT/JP2023/021855**

| C. | DOCUMENTS CONSIDERED TO BE RELEVANT | |
|---|---|---|
| Category* | Citation of document, with indication, where appropriate, of the relevant passages | Relevant to claim No. |
| A | WO 2022/097700 A1 (DAINIPPON PRINTING CO., LTD.) 12 May 2022 (2022-05-12) claims, paragraphs [0007], [0036], [0044]-[0046], [0055]-[0065], [0076]-[0081], tables 1-5 | 1-10 |
| P, X | WO 2023/054251 A1 (TOPPAN PRINTING CO., LTD.) 06 April 2023 (2023-04-06) claims, paragraphs [0009], [0039]-[0043], [0049]-[0051], [0084]-[0091], tables 1, 2 | 1-10 |

Form PCT/ISA/210 (second sheet) (January 2015)

**INTERNATIONAL SEARCH REPORT**
Information on patent family members

International application No.

**PCT/JP2023/021855**

| Patent document cited in search report | | | Publication date (day/month/year) | Patent family member(s) | Publication date (day/month/year) |
|---|---|---|---|---|---|
| JP | 2018-158530 | A | 11 October 2018 | (Family: none) | |
| WO | 2021/020400 | A1 | 04 February 2021 | US 2022/0153006 A1 paragraphs [0099]-[0127], examples 1-10 EP 4005791 A1 CN 114126974 A | |
| WO | 2020/129291 | A1 | 25 June 2020 | (Family: none) | |
| JP | 2020-29095 | A | 27 February 2020 | (Family: none) | |
| JP | 2015-212069 | A | 26 November 2015 | (Family: none) | |
| JP | 7072117 | B1 | 19 May 2022 | (Family: none) | |
| WO | 2022/097700 | A1 | 12 May 2022 | (Family: none) | |
| WO | 2023/054251 | A1 | 06 April 2023 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2021220977 A